(19) Europäisches Patentamt / European Patent Office / Office européen des brevets

(11) EP 4 730 437 A1

(12) **EUROPEAN PATENT APPLICATION**
published in accordance with Art. 153(4) EPC

(43) Date of publication:
**22.04.2026 Bulletin 2026/17**

(21) Application number: **24893817.7**

(22) Date of filing: **23.08.2024**

(51) International Patent Classification (IPC):
***H01M 4/60*** *(2006.01)* ***H01M 4/137*** *(2010.01)*
***H01M 4/1397*** *(2010.01)* ***H01M 4/36*** *(2006.01)*

(52) Cooperative Patent Classification (CPC):
**H01M 4/137; H01M 4/1397; H01M 4/36; H01M 4/38; H01M 4/60;** Y02E 60/10

(86) International application number:
**PCT/JP2024/029925**

(87) International publication number:
**WO 2025/109822 (30.05.2025 Gazette 2025/22)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **22.11.2023 JP 2023198562**

(71) Applicant: **SUMITOMO RUBBER INDUSTRIES, LTD.**
**Kobe-shi, Hyogo 651-0072 (JP)**

(72) Inventor: **NAKAMURA, Hiroyuki**
**Kobe-shi, Hyogo 651-0072 (JP)**

(74) Representative: **Manitz Finsterwald Patent- und Rechtsanwaltspartnerschaft mbB**
**Martin-Greif-Straße 1**
**80336 München (DE)**

(54) **ELECTRODE ACTIVE MATERIAL, ELECTRODE, AND LITHIUM ION SECONDARY BATTERY**

(57) It is an object of the present invention to improve charge and discharge capacity and a capacity retention rate of an electrode active material constituting an electrode of a lithium-ion secondary battery. Provided is an electrode active material of particles comprising an organic sulfur compound, wherein Ao and As satisfy the following inequalities:

(1)

$$A_O > 9.0$$

(2)

$$A_S > 45.0$$

(3)

$$A_O \times A_S > 550$$

where Ao represents an oxygen content, in % by mass, in the electrode active material, and $A_S$ represents a sulfur content, in % by mass, in the electrode active material.

FIG. 1

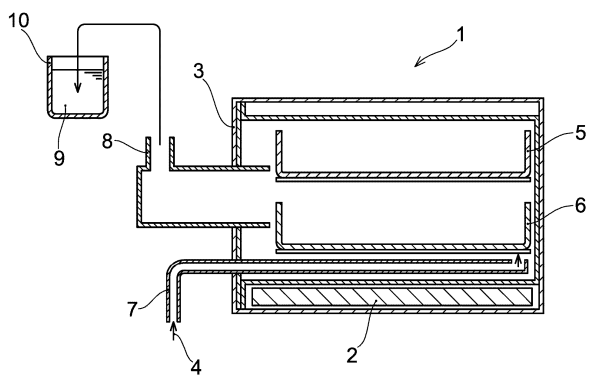

## Description

### TECHNICAL FIELD

The present invention relates to a novel electrode active material, an electrode comprising the electrode active material, and a lithium-ion secondary battery comprising the electrode.

### BACKGROUND ART

Lithium-ion secondary batteries have been mainly used as batteries for portable electronic devices because of their large charge and discharge capacity. In addition, they have been used more and more as batteries for electric vehicles as well, and their performance is expected to improve further.

Patent Document 1 describes a positive electrode active material obtained by heat-treating a high-cis-butadiene rubber together with sulfur and a vulcanization accelerator, and Patent Document 2 describes an electrode active material obtained by calcining polymethyl methacrylate together with sulfur.

### PRIOR ART DOCUMENT

Patent Document

Patent Document 1: WO 2015/050086
Patent Document 2: JP 2021-172814 A

### SUMMARY OF THE INVENTION

### PROBLEMS TO BE SOLVED BY THE INVENTION

However, the active materials in Patent Documents 1 and 2 merely have a low oxygen content, and there is room for improvement in charge and discharge capacity and capacity retention rate.

It is an object of the present invention to provide a novel electrode active material capable of improving charge and discharge capacity and a capacity retention rate, an electrode comprising the electrode active material, that is, a positive electrode or a negative electrode, and a lithium-ion secondary battery comprising the electrode.

### MEANS TO SOLVE THE PROBLEM

The present invention relates to the following electrode active material:

an electrode active material of particles comprising an organic sulfur compound,
wherein Ao and $A_S$ satisfy the following inequalities:

(1)

$$A_O>9.0$$

(2)

$$A_S>45.0$$

(3)

$$A_O \times A_S>550$$

where Ao represents an oxygen content, in % by mass, in the electrode active material, and $A_S$ represents a sulfur content, in % by mass, in the electrode active material.

## EFFECTS OF THE INVENTION

According to the present invention, a novel electrode active material capable of improving charge and discharge capacity and a capacity retention rate, an electrode comprising the electrode active material, that is, a positive electrode or a negative electrode, and a lithium-ion secondary battery comprising the electrode can be provided.

Although it is not intended to be bound by a theory, the following can be considered as a reason why the charge and discharge capacity and the capacity retention rate can be improved in the present invention. That is, sulfur functions as an active material that can be repeatedly charged and discharged by causing a reversible electrochemical reaction with lithium. Also in the present invention, similarly to the prior arts, sulfur is mixed with a polymer and fixed to the polymer through heat treatment, thereby suppressing elution, which is considered to contribute to the reversible reaction. Therefore, it is considered that the more the sulfur atoms there are, the larger the charge and discharge capacity becomes. On the other hand, in the present invention, an oxygen atom is bonded to carbon or sulfur to form a C-O bond or the like. Therefore, (1) the active material comprising these bonds having polarity improves dispersibility of the active material in an electrode slurry using water as a solvent, resulting in production of a uniform electrode, so that it is considered that a cycle capacity is easily maintained even after undergoing expansion and contraction associated with charge and discharge cycles. Moreover, (2) there is a high oxygen content, which is present in a skeleton of the active material, thereby allowing an S-S bond to be more stably held within a structure of the active material, which is therefore considered to result in a high ability to maintain sulfur within the structure of the active material during a reaction between sulfur and lithium associated with insertion and extraction of a lithium ion due to charge and discharge. Therefore, it is considered that the cycle capacity is easily maintained even after undergoing the electrochemical reaction associated with charge and discharge cycles.

In the present specification, the term "cycle characteristics" refers to characteristics in which charge and discharge capacity of a secondary battery is maintained despite repeated charging and discharging. Therefore, as charging and discharging are repeated, a secondary battery with a high degree of decrease in charge and discharge capacity and a low capacity retention rate has poor cycle characteristics, while, on the contrary, a secondary battery with a low degree of decrease in charge and discharge capacity and a high capacity retention rate has excellent cycle characteristics.

## BRIEF DESCRIPTION OF THE DRAWINGS

FIG. 1 is a cross-sectional view schematically showing a reaction device used for producing an electrode active material in Examples of the present invention.

## EMBODIMENT FOR CARRYING OUT THE INVENTION

The embodiment relating to the present invention will be described below. Besides, numerical values of upper limits and lower limits relating to "or more", "or less", "greater than", "less than", etc. for descriptions of numerical ranges are numerical values that can be arbitrarily combined, and numerical values in Examples can also be these upper limits and/or the lower limits. Moreover, a numerical range shown to include lower limits or upper limits is interpreted as simultaneously disclosing a numerical range not including the upper limits or the lower limits, unless contrary to the purpose of the present invention, and conversely, a numerical range shown not to include lower limits or upper limits is interpreted as simultaneously disclosing a numerical range including the lower limits or the upper limits, unless contrary to the purpose of the present invention.

One embodiment of the present invention is an electrode active material of particles comprising an organic sulfur compound, wherein Ao and $A_S$ satisfy the following inequalities:

(1)

$$A_O>9.0$$

(2)

$$A_S>45.0$$

(3)

$$A_O \times A_S>550$$

where Ao represents an oxygen content, in % by mass, in the electrode active material, and As represents a sulfur content, in % by mass, in the electrode active material.

The right side in the inequality (1) is preferably 11.0. The right side in the inequality (2) is preferably 50.0. The right side in the inequality (3) is preferably 570. It is considered that the effects of the present invention are achieved further by satisfying at least any of the inequalities with a stricter condition.
It is preferable that the active material further comprises a metal compound comprising at least one metal selected from the group consisting of iron, molybdenum, vanadium, and titanium.
The metal compound is preferably an iron compound.
Another embodiment of the present invention is an electrode comprising the electrode active material.
Preferably, the electrode comprises a current collector, the current collector comprising a metal foil, and D, Ao, and As satisfy the following inequality:
(4)

$$D\times(A_O\times A_S)>1000$$

where D represents an application density, in $mg/cm^2$, of the electrode active material on the current collector.
By setting a product of the application density, the oxygen content, and the sulfur content to exceed a predetermined value, it is considered that performance of the electrode and/or the battery can be improved.
Preferably, the electrode comprises a current collector, the current collector comprises a metal foil, and D, T, Ao, and $A_S$ satisfy the following inequality:
(5)

$$D\times(A_O\times A_S)/T>60$$

where D represents an application density, in $mg/cm^2$, of the electrode active material on the current collector, and T represents a thickness, in μm, of the metal foil.
By making the application density, the oxygen content, the sulfur content, and the thickness of the metal foil to satisfy the above-described inequality, it is considered that performance of the electrode and/or the battery can be improved.
Preferably, the electrode comprises a current collector, the current collector comprises a metal foil, and D is greater than 2.50 $mg/cm^2$, where D represents an application density, in $mg/cm^2$, of the electrode active material on the current collector.
The electrode is preferably a positive electrode.
It is considered that use of the electrode as the positive electrode can improve performance of the electrode and/or the battery.
Another embodiment of the present invention is a lithium-ion secondary battery comprising the electrode.
Preferably, the lithium-ion secondary battery further comprises an electrolyte, and D, V, Ao, and As satisfy the following inequality:
(6)

$$D\times(A_O\times A_S)/V>4000$$

where V represents a volume, in mL, of the electrolyte, and D represents an application density, in $mg/cm^2$, of the electrode active material on the current collector.
By making the application density, the oxygen content, the sulfur content, and the volume of the electrolyte to satisfy the above-described inequality, it is considered that performance of the electrode and/or the battery can be improved.
Another embodiment of the present invention is a method of producing an electrode active material, the method comprising:

(1) a mixing step of mixing a raw material containing cellulose and sulfur having a mass equal to or greater than a mass of the cellulose to obtain a calcination raw material;
(2) a calcination step of calcining the calcination raw material to obtain a calcined material; and
(3) a pulverization step of pulverizing the calcined material to obtain particles of the calcined material.

The cellulose is preferably a chemically unmodified cellulose.

This is because it is considered that the chemical unmodification avoids the reaction between sulfur and cellulose from becoming insufficient due to chemical modification, and as a result, a decrease in sulfur content can be avoided.

<Definitions>

A "particle" refers to one in a state where an electrode active material has been made fine enough to be suitable for mixing with other materials for the purpose of the present invention. Regarding a particle that constitutes an electrode active material, a size of such a particle is not particularly limited as long as the above-described mixing can be appropriately performed. For example, if a "particle" is expressed in terms of median diameter, it can be in a range from 1 nm to 1000 μm.

A "particle size" is expressed as a median diameter (d50), unless otherwise specified.

An "electrode active material" is one of electrode materials of a battery, and refers to a material involved in reaction that generates electricity. The electrode active material includes a positive electrode active material and a negative electrode active material.

An "oxygen content in an electrode active material" is an amount, in % by mass, of an oxygen element contained in the electrode active material.

A "sulfur content in an electrode active material" is an amount, in % by mass, of a sulfur element contained in the electrode active material.

An "active material" refers to a material that is responsible for an oxidation-reduction reaction that takes place for an energy conversion in a lithium-ion secondary battery.

An "application density" is a mass, in mg, of an active material applied on a current collector per unit area, in $cm^2$.

A "volume of an electrolyte" means a total volume of an electrolyte solution including a solute, or a solid electrolyte. The unit is mL.

An "initial discharge capacity" refers to the 2nd discharge capacity, unless otherwise specified.

<Measuring method>

"Contents of oxygen, sulfur, etc. in an electrode active material" are each measured by the method described in Examples. That is, amounts of elements of carbon, hydrogen, nitrogen, and sulfur are measured by the oxygen stream combustion-infrared absorption method using the vario MICRO cube, a fully automatic elemental analyzer, manufactured by Elementar. An amount of an element of oxygen is measured by the inert gas fusion-infrared absorption method using Oxygen/Nitrogen/Hydrogen Analyzer, EMGA-930, manufactured by Horiba, Ltd.

A "particle size distribution" is measured with a laser diffraction/scattering type particle size distribution analyzer (particle size distribution analyzer PSA1090L manufactured by Anton Paar GmbH) using water as a dispersion medium.

A "median diameter" is measured as a volume basis cumulative 50% size, in μm, in a particle size distribution, unless otherwise specified.

The electrode active material, the electrode, and the lithium-ion secondary battery of the present embodiment will be described below.

<Electrode active material>

The electrode active material is an electrode active material of particles comprising an organic sulfur compound, which is, as shown in the above-described inequalities (1) to (3), an electrode active material in which an oxygen content Ao, in % by mass, and a sulfur content $A_S$, in % by mass, in the electrode active material, each exceeds a predetermined value, and a product of Ao and As exceeds a predetermined value.

The organic sulfur compound is a compound formed by calcining an organic compound represented by cellulose or the like with sulfur under a non-oxidizing atmosphere to incorporate sulfur. In the present embodiment, the organic sulfur compound is not particularly limited as long as it constitutes particles and an electrode active material composed of particles satisfies the above-described inequalities (1) to (3).

(Inequalities (1) to (3))

$A_O$ and $A_S$ satisfy the following inequalities:

(1)

$$A_O>9.0$$

(2)

$$A_S > 45.0$$

(3)

$$A_O \times A_S > 550$$

where Ao represents an oxygen content, in % by mass, in the electrode active material, and As represents a sulfur content, in % by mass, in the electrode active material.

The right side in the inequality (1) is preferably 10.0, more preferably 11.0, further preferably 12.0, further preferably 13.0, further preferably 14.0, further preferably 15.0, further preferably 16.0, further preferably 17.0, further preferably 18.0. An upper limit of the value of $A_O$ is not particularly limited, but it can be assumed to be about 30.00 as the reference value.

$A_O$ can be increased by using an organic compound containing many oxygen atoms as a raw material for calcination, and conversely, it can be decreased by using an organic compound containing few oxygen atoms as a raw material for calcination. Examples of an organic compound containing a relatively large number of oxygen atoms include, for example, cellulose.

(Inequality (2))

The right side in the inequality (2) is preferably 46.0, more preferably 47.0, further preferably 48.0, further preferably 49.0, further preferably 50.0, further preferably 51.0, further preferably 52.0, further preferably 53.0, further preferably 54.0, further preferably 55.0, further preferably 56.0, further preferably 57.0, further preferably 58.0, further preferably 59.0. An upper limit of the value of $A_S$ is not particularly limited, but it can be assumed to be about 70.0 as the reference value.

$A_S$ can be increased by using more sulfur as raw materials for calcination, and conversely, it can be decreased by using less sulfur as raw materials for calcination.

(Inequality (3))

The right side in the inequality (3) is preferably 560, more preferably 570, further preferably 600, further preferably 650, further preferably 700, further preferably 750, further preferably 800, further preferably 830, further preferably 840. An upper limit of $A_O \times A_S$ is not particularly limited, but it can be assumed to be about 1500 as the reference value.

$A_O \times A_S$ can be adjusted by adjusting the value of $A_O$ and the value of $A_S$, respectively.

(Elements other than oxygen and sulfur)

The electrode active material may contain elements other than oxygen and sulfur. Examples of such elements include carbon, hydrogen, nitrogen, and the like.

[Carbon content]

An amount of a carbon element is preferably greater than 5.0% by mass, more preferably greater than 10.0% by mass, further preferably greater than 15.0% by mass, from the viewpoint of improving performance of the electrode and/or the battery. On the other hand, the amount of the element is preferably less than 50.0% by mass, more preferably less than 45.0% by mass, further preferably less than 40.0% by mass.

[Hydrogen content]

Hydrogen (H) in the organic compound is reacted with sulfur by calcining to become hydrogen sulfide, which is released outside the system. Thus, a hydrogen content in the electrode active material is preferably less than 1.0% by mass, more preferably less than 0.7% by mass, further preferably less than 0.5% by mass. When it is less than 1.0% by mass, there is a tendency that calcination (sulfurization reaction) is sufficient. Therefore, in this case, the charge and discharge capacity tends to be improved.

[Nitrogen content]

An amount of a nitrogen element, in % by mass, in the electrode active material may be 0% by mass if no nitrogen source is used as a raw material. For example, if a compound containing a nitrogen atom is used as an organic compound, a nitrogen element can be detected.

(Amount of metal element)

It is preferable that the electrode active material further comprises a metal compound comprising at least one metal selected from the group consisting of iron, molybdenum, vanadium, and titanium. Moreover, the metal compound is preferably an iron compound. One or more kinds of the metal compound can be used.
When the electrode active material comprises a metal compound, an amount of a metal element, in % by mass, is preferably greater than 10.0% by mass, more preferably greater than 15.0% by mass, further preferably greater than 20.0% by mass, while the amount of the metal element is preferably less than 30% by mass, more preferably less than 25.0% by mass, further preferably less than 24.0% by mass, from the viewpoint of improving performance of the electrode and/or the battery. Here, when the metal compound comprises a plurality of metal elements, the amount of the metal elements means a total amount of the plurality of metal elements.

(Median diameter)

The electrode active material is composed of particles, and a size of the particle is suitable for producing an electrode. A preferred range of a particle size of the electrode active material is preferably about greater than 1.0 μm and less than 40.0 μm in terms of median diameter (median diameter d50) from the viewpoint of improving performance of the electrode and/or the battery. The median diameter is more preferably greater than 1.5 μm, further preferably greater than 2.0 μm, further preferably greater than 3.0 μm. Moreover, the median diameter is more preferably less than 30.0 μm, further preferably less than 25.0 μm, further preferably less than 20.0 μm, further preferably less than 15.0 μm, further preferably less than 10.0 μm, further preferably less than 8.0 μm. The median diameter can be measured by a method described in Examples section below.

(Other components)

The electrode active material of the present embodiment can contain materials described in the Producing method section below in the same manner as described in the same section.

<Electrode>

The electrode relating to one embodiment of the present invention is an electrode comprising the above-described electrode active material. The electrode is preferably one obtained by mixing the above-described electrode active material together with other electrode materials such as a conductive aid, a binder, and the like as necessary, and applying the mixture onto a current collector.
The electrode relating to the present embodiment can be used for a lithium-ion secondary battery, and the electrode can be configured by using materials described in the Producing method section below in the same manner as described in the same section. That is, when the above-described electrode is used as a positive electrode, a conductive aid, a binder, a current collector, etc. described in the Producing method section below can be used in the same manner as described in the same section to form a positive electrode for lithium-ion secondary battery, and when the above-described electrode is used as a negative electrode, a conductive aid, a binder, a current collector, etc. described in the Producing method section below can be used in the same manner as described in the same section to form a negative electrode for lithium-ion secondary battery. As such, the descriptions in the Producing method section below can be taken into consideration as descriptions of the present electrode.
Preferably, the electrode of the present embodiment comprises a current collector, the current collector comprising a metal foil, and D, $A_O$, and $A_S$ satisfy the following inequality:
(4)

$$D \times (A_O \times A_S) > 1000$$

where D represents an application density, in mg/cm$^2$, of the electrode active material on the current collector.

(Inequality (4))

The right side in the inequality (4) is more preferably 1500, further preferably 1700, further preferably 1900, further preferably 2100, further preferably 2200, further preferably 2300. Besides, the higher the value on the left side in the inequality (4) is, the more preferable it is, and there is no significance in setting an upper limit, but it can be assumed to be about 5000, as the reference value.

(Application density)

The application density D, in mg/cm$^2$, of the electrode active material on the electrode is preferably greater than 2.50 mg/cm$^2$, more preferably greater than 3.00 mg/cm$^2$, further preferably greater than 3.50 mg/cm$^2$, further preferably greater than 3.80 mg/cm$^2$, further preferably greater than 3.90 mg/cm$^2$. The higher the value of the application density is, the more preferable it is, and there is no significance in setting an upper limit, but it can be assumed to be about 15.0 mg/cm$^2$, as the reference value.

(Inequality (5))

Preferably, the electrode of the present embodiment comprises a current collector, the current collector comprises a metal foil, and D, T, $A_O$, and $A_S$ satisfy the following inequality:
(5)

$$D \times (A_O \times A_S)/T > 60$$

where D represents an application density, in mg/cm$^2$, of the electrode active material on the current collector, and T represents a thickness, in μm, of the metal foil.

The right side in the inequality (5) is more preferably 80, further preferably 90, further preferably 110, further preferably 120, further preferably 130. The higher the value on the left side in the inequality (5) is, the more preferable it is, and there is no significance in setting an upper limit, but it can be assumed to be about 300, as the reference value.

(Thickness of metal foil)

A preferred range of a thickness T, in μm, of the metal foil is preferably 5 μm or more, more preferably 10 μm or more. On the other hand, T is preferably 40 μm or less, more preferably 30 μm or less, further preferably 25 μm or less.

(Charge and discharge capacity)

The electrode of the present embodiment exhibits excellent charge and discharge capacity. The 2nd discharge capacity ($DC_2$), which is the initial discharge capacity, is a discharge capacity when charging and discharging with a discharge termination voltage of 1.0V and a charge termination voltage of 3.0V are performed two times after production of an electrode and a battery (the second discharging when charging and discharging is repeated as the 1st discharging, the 1st charging, the 2nd discharging, and the 2nd charging). In the case of discharging, when discharging is performed at a constant current (current value equivalent to 50 mA per 1 g of a positive electrode active material), a voltage of 3.0V finally drops to 1.0V. A total time, in h, taken for the voltage to drop from 3.0V to 1.0V is measured, which is multiplied by an applied current, in mA, to obtain a capacity, in mAh, and then which is divided by a weight of the active material to obtain a specific capacity, in mAh/g. On the other hand, in the case of charging, a voltage conversely rises due to charging with a constant current, and when it finally reaches 3.0V, charging is terminated. The same applies to the 10th discharge capacity, the 20th discharge capacity, and the like mentioned below.

[Initial discharge capacity ($DC_2$)]

The initial discharge capacity ($DC_2$), in mAh/g, when using the electrode of the present embodiment as a positive electrode is preferably greater than 455 mAh/g. $DC_2$ is more preferably greater than 460 mAh/g, further preferably greater than 470 mAh/g, further preferably 480 mAh/g or more, further preferably greater than 490 mAh/g, further preferably greater than 500 mAh/g, further preferably greater than 550 mAh/g. There is no particular limit to an upper limit of the initial discharge capacity, and the higher it is, the more preferable it is. Thus, there is little significance in mentioning the upper limit of the initial discharge capacity, but usually, it can also be assumed to be, for example, about 1000 mAh/g, merely as the reference value.

[20th discharge capacity ($DC_{20}$)]

A discharge capacity when repeating charging and discharging 20 times, i.e., the 20th discharge capacity ($DC_{20}$), in mAh/g, when using the electrode of the present embodiment as a positive electrode, is preferably greater than 375 mAh/g. $DC_{20}$ is more preferably greater than 400 mAh/g, further preferably greater than 430 mAh/g, further preferably greater than 450 mAh/g, further preferably greater than 480 mAh/g, further preferably greater than 490 mAh/g, further preferably greater than 500 mAh/g, further preferably greater than 550 mAh/g. There is no particular limit to an upper limit of the discharge capacity, and the higher it is, the more preferable it is. Thus, there is little significance in mentioning the upper limit of the discharge capacity, but usually, it can also be assumed to be, for example, about the value of the initial discharge capacity or about 900 mAh/g, merely as the reference value.

In addition, the 2nd or 20th discharge capacity when the electrode of the present embodiment is used as a positive electrode is determined by a configuration of the positive electrode if it is measured so that a performance relating to the discharge capacity of the positive electrode can be fully exhibited using a negative electrode and an electrolyte within common technical knowledge that can be durably used as a lithium-ion secondary battery (i.e., such that Li is not depleted). For example, for the negative electrode, an amount of lithium used may be preferably 2 times or more, more preferably 5 times or more, further preferably 10 times or more, further preferably 50 times or more (mol amount) of an amount of sulfur (mol amount) in the positive electrode. Moreover, for example, for the electrolyte, when an amount of an electrolyte solution (microliter) is preferably 10 times or more, more preferably 20 times or more, further preferably 50 times or more an amount of sulfur, in mg, in the positive electrode, the discharge capacity of the positive electrode can be fully exhibited, leading to a longer battery life. On the other hand, in consideration of an energy density of the battery, it is preferable that the amount of the electrolyte solution is small. For example, the amount of the electrolyte solution (microliter) is preferably 5 times or less, more preferably 3 times or less, further preferably 1 time or less the amount of sulfur, in mg, in the positive electrode. Here, a volume V, in mL, of the electrolyte means a total volume of electrolyte solutions including a solute. Besides, the electrolyte may be in a form of an electrolyte solution or in a form of a solid (solid electrolyte), or a combination of them can be used.

(Application)

The electrode of the present embodiment can be used as a positive or negative electrode of a lithium-ion secondary battery. Moreover, the electrode of the present embodiment is preferably used as a positive electrode of a lithium-ion secondary battery.

<Lithium-ion secondary battery>

The lithium-ion secondary battery in one embodiment of the present invention is a lithium-ion secondary battery comprising the above-described electrode.

The lithium-ion secondary battery of the present embodiment can be configured by using materials described in the Producing method section below in the same manner as described in the same section. That is, when the above-described electrode is used as a positive electrode, the lithium-ion secondary battery can be configured by using a negative electrode, an electrolyte, a separator, etc. described in the Producing method section below in the same manner as described in the same section. On the other hand, when the above-described electrode is used as a negative electrode, the lithium-ion secondary battery can be configured by using a positive electrode, an electrolyte, a separator, etc. described in the Producing method section below in the same manner as described in the same section. As such, the descriptions in the Producing method section below can be taken into consideration as descriptions of the present lithium-ion secondary battery.

(Inequality (6))

Preferably, the lithium-ion secondary battery of the present embodiment further comprises an electrolyte, and D, V, $A_O$, and $A_S$ satisfy the following inequality (6):
(6)

$$D\times(A_O\times A_S)/V>4000$$

where V represents a volume, in mL, of the electrolyte, and D represents an application density, in $mg/cm^2$, of the electrode active material on the current collector.

The right side in the inequality (6) is more preferably 4500, further preferably 5000, further preferably 5500, further preferably 6000, further preferably 7000, further preferably 7500, further preferably 8000. The higher the value on

the left side in the inequality (6) is, the more preferable it is, and there is no significance in setting an upper limit, but it can be assumed to be about 20000, as the reference value.

(Volume V of electrolyte)

Since a range of a volume V, in mL, of the electrolyte can vary depending on a size of a battery, it is not generally defined, and it has only to use the minimum amount that brings out performance of the electrode active material and allows the battery to operate satisfactorily. For example, in the case of the coin-type battery shown in Examples, the volume is preferably 0.1 mL or more, more preferably 0.12 mL or more, further preferably 0.15 mL or more, merely as the reference value. On the other hand, V is preferably 0.40 mL or less, more preferably 0.30 mL or less, further preferably 0.28 mL or less, further preferably 0.25 mL or less.

(Application)

The lithium-ion secondary battery of the present embodiment is useful as a lithium-ion secondary battery with improved overall performance of charge and discharge capacity and a capacity retention rate, and can be used as a battery for a portable information terminal such as a smartphone, a notebook personal computer, and the like, a portable electronic device such as a music player, a digital camera, and the like, and a medical device, as well as for a battery for a next-generation clean energy automobile such as a hybrid electric vehicle (HEV), an electric vehicle (EV), a plug-in hybrid electric vehicle (PHEV), and the like.

<Producing method>

The producing method of the electrode active material, the electrode, and the lithium-ion secondary battery of the present embodiment will be described below in order.

(Production of electrode active material)

The electrode active material of the present embodiment can be produced by various methods, examples of which include, for example, the following method as a method of using cellulose for an organic compound used as a raw material.

That is, the electrode active material of the present embodiment can be produced by a producing method comprising:

(1) a mixing step of mixing a raw material containing cellulose and sulfur having a mass equal to or greater than a mass of the cellulose to obtain a calcination raw material;
(2) a calcination step of calcining the calcination raw material to obtain a calcined material; and
(3) a pulverization step of pulverizing the calcined material to obtain particles of the calcined material.

[Raw material]

Raw materials used as calcination raw materials will be described below.

<<Cellulose>>

Cellulose (Cell-OH, Ce) is a natural polymer that is a main component of a cell wall or a fiber of a plant cell, and is a carbohydrate represented by $(C_{12}H_{20}O_{10})_n$. Cellulose has the following chemical structural formula. In this chemical structural formula, n indicating an average number of repetitions is a number of 1 or more, preferably 10 to 10000, more preferably 50 to 2000.

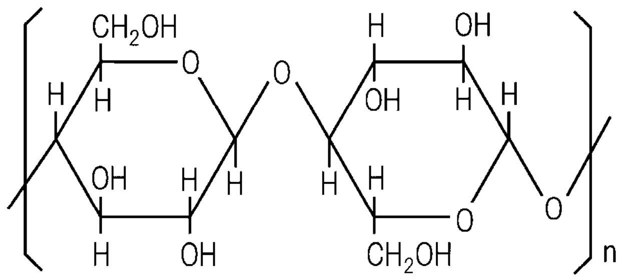

As is clear from the above-described chemical structural formula, cellulose has a plurality of hydroxyl groups, and therefore, an ester is present therein in which all or part of the hydroxyl groups have been esterified with an esterifying agent. The esterifying agent is not particularly limited as long as it can impart a carboxy group to a hydrophilic group of cellulose, and various ones can be used, for example, a carboxylic acid-based compound can be used, and, for example, a compound having two or more carboxy groups, an acid anhydride of a compound having two or more carboxy groups, and the like can be used. In the present embodiment, cellulose also includes such an ester.

Cellulose as a plant material consists of cellulose fibers of 20 to 40 μm in size, and each cellulose fiber is a bundle of cellulose microfibrils, and each cellulose microfibril is in turn a bundle of cellulose molecular chains. Thus, such cellulose as a plant material is preferably defibrated before use.

There are two types of defibration treatment, mechanical defibration and chemical defibration, and either type can be used in the present embodiment. Here, examples of mechanical defibration treatment include a high-pressure homogenizer method, a microfluidizer method (opposed jet collision method), a grinder method, a ball mill crushing method, a bead mill crushing method, a freeze crushing method, and the like. Among them, a freeze crushing method is preferable. Moreover, examples of chemical defibration treatment include a TEMPO method, a phosphate esterification method, a phosphite esterification method, a carboxymethylation method, a xanthation method, a sulfonation method, an enzyme hydrolysis method, an acid hydrolysis method, an ionic liquid selective dissolution method, and the like.

If cellulose is defibrated by mechanical defibration treatment, it is not chemically modified, but if cellulose is defibrated by chemical defibration treatment, it is chemically modified. In the present embodiment, cellulose is preferably cellulose that has been defibrated by mechanical defibration treatment and has not been chemically modified, from the viewpoint of improving performance of the electrode and/or the battery.

Besides, prior to defibration treatment, cellulose is preferably subjected to a chemical or enzymatic pretreatment.

One or more kinds of cellulose can be used.

<<Sulfur>>

As sulfur, any of those in various forms such as a powdered sulfur, an insoluble sulfur, a precipitated sulfur, a colloidal sulfur, and the like can be used. Among them, a precipitated sulfur and a colloidal sulfur are preferable. One or more kinds of sulfur can be used.

A content of sulfur in the calcination raw material is preferably 100 parts by mass or more, more preferably greater than 100 parts by mass, further preferably 200 parts by mass or more, further preferably greater than 200 parts by mass, further preferably 300 parts by mass or more, based on 100 parts by mass of cellulose, from the viewpoint of improving performance of the electrode and/or the battery. On the other hand, there is no particular upper limit to the sulfur content, but it is preferably less than 1000 parts by mass, more preferably less than 900 parts by mass, further preferably less than 800 parts by mass, further preferably less than 700 parts by mass, further preferably less than 600 parts by mass, further preferably less than 500 parts by mass, further preferably 400 parts by mass or less. When the content is less than 1000 parts by mass, there is a tendency to be advantageous in terms of cost.

As sulfur, any of various allotropes can be used, but those comprising $S_8$ sulfur which is solid at normal temperature and pressure are preferable, and $S_8$ sulfur alone is more preferable.

<<Raw-material metal compound>>

When the electrode active material further comprises a metal compound comprising at least one metal selected from the group consisting of iron, molybdenum, vanadium, and titanium, a raw-material metal compound can be used further as a raw material for calcination. Examples of the raw-material metal compound include raw-material metal compounds described below. As the raw-material metal compound, it is preferable to use a raw-material iron compound.

<<Raw-material iron compound>>

Examples of a raw-material iron compound include an iron compound containing a divalent or trivalent iron ion, but it is not particularly limited as long as it decomposes during calcination and reacts with sulfur to produce iron disulfide, and various compounds can be used. Examples of the raw-material iron compound include an iron salt of an acid, an iron complex, and the like. Examples of the iron salt of an acid include both an iron salt of an organic acid and an iron salt of an inorganic acid. On the other hand, examples of the iron complex include a neutral iron complex and an iron complex ion salt (iron complex salt). Among them, an iron salt of an organic acid, an iron salt of an inorganic acid, or a neutral iron complex is preferable. One or more kinds of the iron compound can be used.

Examples of the iron salt of an organic acid include, for example, a salt of divalent iron ($Fe^{2+}$) and an organic acid, a salt of trivalent iron ($Fe^{3+}$) and an organic acid, and the like. Among them, a salt of divalent iron and an organic acid is preferable. The organic acid is, but not particularly limited to, one having a carboxyl group (-COOH), one having a sulfo group ($-SO_3H$), or the like. Among them, one having a carboxyl group is preferable. Specific examples of the organic acid include a fatty acid, oxalic acid, tartaric acid, citric acid, malic acid, succinic acid, and the like. Specific examples of fatty acid include, for example, those having 1 or more and 6 or less carbon atoms such as acetic acid, propionic acid, butyric acid, and the like. Among them, acetic acid, oxalic acid, and the like are preferable. Preferred examples of the iron salt of an organic acid include iron (II) acetate, iron (II) oxalate, and the like. They may be hydrates. One or more kinds of iron salts of an organic acid can be used.

Examples of the iron salt of an inorganic acid include, for example, a salt of divalent iron ($Fe^{2+}$) and an inorganic acid, a salt of trivalent iron ($Fe^{3+}$) and an inorganic acid, and the like. Specific examples of the inorganic acid include hydrochloric acid, sulfuric acid, nitric acid, and the like. Among them, nitric acid and the like are preferable. Preferred examples of the iron salt of an inorganic acid include iron (II) chloride, iron (III) chloride, iron (II) sulfate, iron (III) sulfate, iron (II) nitrate, iron (III) nitrate, and the like. They may be hydrates. One or more kinds of iron salts of an inorganic acid can be used.

Examples of the iron complex include, for example, a divalent iron ($Fe^{2+}$) complex, a trivalent iron ($Fe^{3+}$) complex, and the like. The iron complex may be in a form of a neutral complex or in a form of a complex salt. A ligand that coordinates to the iron ion is not particularly limited, examples of which include, for example, halogen atoms such as a chlorine atom, a bromine atom, and the like, a cyano group, a dicyclopentadienyl group, N,N'-bis(salicylidene)ethylenediamine, and the like. Examples of the iron complex include, for example, potassium hexacyanidoferrate(II) ($[Fe(CN)_6]K_4$), potassium hexacyanidoferrate(III) ($[Fe(CN)_6]K_3$), sodium iron(III) chloride ($[FeCl_4]Na$), dicyclopentadienyl iron(II) (ferrocene), N,N'-bis(salicylidene)ethylenediaminatoiron(III) chloride, and the like. One or more kinds of iron complexes can be used.

<<Raw-material molybdenum compound>>

Examples of a raw-material molybdenum compound include molybdenum trioxide (VI), sodium molybdate (VI), hexaammonium heptamolybdate (VI), diammonium molybdate (VI), calcium molybdate (VI), molybdic acid (VI), phosphomolybdic acid (VI), molybdenum disulfide (VI), and the like. One or more kinds of the molybdenum compound can be used.

<<Raw-material vanadium compound>>

Examples of a raw-material vanadium compound include vanadium pentoxide (V), ammonium metavanadate (V), vanadium oxytrichloride (V), sodium metavanadate (V), potassium vanadate (V), sodium vanadate (V), vanadium tetrachloride (IV), vanadium oxysulfate (IV), vanadium oxydichloride (IV), vanadium oxide (IV), vanadium trichloride (IV), vanadium oxide (III), hexavanadium tridecaoxide (IV, V), and the like. One or more kinds of the vanadium compound can be used.

<<Raw-material titanium compound>>

Examples of a raw-material titanium compound include titanium oxide, titanium dioxide, titanium dioxide, titanium trioxide, titanium tetrachloride, and the like. One or more kinds of the titanium compound can be used.

<<Content of raw-material metal compound>>

A content of the raw-material metal compound in the calcination raw material is preferably 50 parts by mass or more and 300 parts by mass or less based on 100 parts by mass of cellulose from the viewpoint of improving performance of the electrode and/or the battery. The content is more preferably greater than 50 parts by mass, further preferably greater than 60 parts by mass, further preferably greater than 70 parts by mass, further preferably greater than 75 parts by mass.

On the other hand, the content is more preferably less than 250 parts by mass, further preferably less than 200 parts by mass, further preferably less than 150 parts by mass, further preferably 100 parts by mass or less.

<<Median diameter of raw-material metal compound>>

When the raw-material metal compound is used as a calcination raw material, it is preferably pulverized in advance. A median diameter (d50) of the metal compound is preferably 12.00 μm or less, more preferably 10.00 μm or less, more preferably 8.00 μm or less, further preferably 6.00 μm or less, further preferably 4.00 μm or less, further preferably 3.00 μm or less. On the other hand, a lower limit of the median diameter is not particularly limited, but it is usually about 0.10 μm or more, and may be about 1.00 μm or about 2.00 μm. The median diameter can be measured by the above-described method.

<<Specific surface area of raw-material metal compound>>

A specific surface area of the raw-material metal compound is preferably 1.0 $m^2/g$ or more, more preferably 2.0 $m^2/g$ or more, further preferably 3.0 $m^2/g$ or more, further preferably 4.0 $m^2/g$ or more, further preferably 4.5 $m^2/g$ or more. On the other hand, an upper limit of the specific surface area is not particularly limited, but it is usually about 40.0 $m^2/g$ or less, and may be about 20.0 $m^2/g$ or less or about 10.0 $m^2/g$ or less. The specific surface area can be measured by Full Automatic Surface Area Analyzer, Macsorb (HM-model 1201, manufactured by MOUNTECH Co., Ltd.).

The raw-material metal compound having the median diameter or specific surface area as described above can be prepared by a conventional method, for example, by pulverizing a raw-material metal compound with a pulverizer. As such a pulverizer, for example, one manufactured by Japan Analytical Industry Co., Ltd. (e.g., JFC-2000, etc.) can be used.

<<Other materials>>

A raw material may appropriately comprise other materials commonly used in this field, as desired. Examples of such materials include a carbon material.

<<Carbon material>>

In the electrode active material of the present embodiment, the carbon material is preferably one having a graphite structure. Moreover, the carbon material is preferably electrically conductive. Examples of the carbon material can include, for example, a porous carbon material such as an activated carbon and the like, graphite, carbon black, acetylene black, and Ketjen black, as well as carbon fibers such as a carbon fiber, a vapor-grown carbon fiber (VGCF), a carbon nanotube (CNT), a carbon nanofiber, and the like, and nanocarbon materials in forms of other than carbon fibers, such as graphene, fullerene, and the like. Among them, carbon fibers such as a carbon fiber, a vapor-grown carbon fiber (VGCF), CNT, a carbon nanofiber, and the like are preferable, and CNT is particularly preferable. One or more kinds of the carbon material can be used.

When the carbon material is a carbon fiber, it is preferable that, as a form of the fiber constituting the carbon fiber, an average fiber length is a predetermined value or more and an average fiber diameter is a predetermined value or less, from the viewpoint of improving performance of the electrode and/or the battery. This is because it is considered that the conductivity of the electrode active material can be improved. The average fiber length is preferably greater than 1 μm, more preferably greater than 1.5 μm, further preferably 2 μm or more. There is no particular limit to an upper limit of the average fiber length, and it may be 100 μm, 50 μm, or 20 μm. Moreover, the average fiber diameter is preferably less than 100 nm, more preferably less than 50 nm, further preferably less than 10 nm. There is no particular limit to a lower limit of the average fiber diameter, but it is usually about 1 nm.

An aspect ratio of the carbon material is preferably greater than 10, more preferably greater than 100, further preferably greater than 1000, and it is also preferably less than 100000, more preferably less than 50000, further preferably less than 10000.

A specific surface area of the carbon material is preferably 400 $m^2/g$ or more, and it is preferably 2400 $m^2/g$ or less, from the viewpoint of the effects of the present invention. The specific surface area is more preferably 500 $m^2/g$ or more, further preferably 600 $m^2/g$ or more. On the other hand, the specific surface area is more preferably 2000 $m^2/g$ or less, further preferably 1800 $m^2/g$ or less. Besides, the specific surface area is measured by the BET multipoint method.

A G/D ratio of the carbon material is preferably 10 or more from the viewpoint of the effects of the present invention. The G/D ratio is more preferably 20 or more, further preferably 30 or more, further preferably 40 or more. On the other hand, there is no particular limit to an upper limit of the G/D ratio, but if it is no less than 50, it can be said that the carbon material has extremely few defects. Here, the G/D ratio is a ratio of a representative Raman shift peak in a Raman spectrum for a carbon material, and more specifically, it is a ratio of a G-band peak derived from a graphite structure to a D-band peak

derived from defects. Besides, the Raman spectrum is measured with RAMANtouch (excitation wavelength $\lambda$=532 nm, grating: 1200 gr/mm, resolution: 1.2 cm-1) manufactured by Nanophoton Corporation.

An amount of metal impurities in the carbon material is preferably 5% by mass or less from the viewpoint of the effects of the present invention. The amount of metal impurities is preferably 3% by mass or less, more preferably 2% by mass or less, further preferably 1% by mass or less. The smaller the amount of metal impurities is, the better it is, but, for example, 0.1% by mass is sufficient as a small amount of metal impurities. Besides, the metal impurities mentioned here refer to metal elements other than iron, molybdenum, vanadium, and titanium.

A content of the carbon material in the calcination raw material is preferably less than 5 parts by mass based on 100 parts by mass of the cellulose from the viewpoint of improving performance of the electrode and/or the battery. The content is more preferably less than 1 part by mass, further preferably less than 0.5 parts by mass. On the other hand, the content is preferably greater than 0.05 parts by mass, more preferably greater than 0.07 parts by mass, further preferably 0.10 parts by mass or more.

(Producing step)

[Mixing step (1)]

The mixing step is a step of mixing a raw material containing cellulose and sulfur having a mass equal to or greater than a mass of the cellulose to obtain a calcination raw material.

The above-described mixing is not particularly limited as long as it is a method by which these components are mixed sufficiently, and it can be performed by a conventional method. In the present embodiment, for example, a method can be exemplified in which raw materials containing cellulose in powder state and sulfur in powder state having a mass equal to or greater than a mass of the cellulose are mixed as they are using a blender or the like. Moreover, when any of optional components such as a raw-material metal compound, a carbon material, and the like is added to the raw materials, the optional component may also be mixed together by the blender or the like.

Here, the powder refers to a state where each material that is solid has been made fine enough to be suitable for mixing for the purpose of the present invention. A size of each particle that constitutes the powder is not particularly limited as long as mixing is appropriately performed, but it is usually within a range of 1 $\mu$m or more and 40 $\mu$m or less, for example. The size of the particle is preferably 2 $\mu$m or more, more preferably 3 $\mu$m or more, further preferably 4 $\mu$m or more, and it is preferably 30 $\mu$m or less, further preferably 20 $\mu$ or less, further preferably 15 $\mu$m or less, further preferably 10 $\mu$m or less, in terms of median diameter, from the viewpoint of improving performance of the electrode and/or the battery. The median diameter can be measured by the above-described method.

The raw materials thus obtained may be used as they are in the next calcination step, or if desired, they are formed into pellets, which can be then used in the next step.

[Calcination step (2)]

The calcination step is a step of calcining the calcination raw materials as obtained above to obtain a calcined material. The calcination can be performed by a conventional method, for example, by heating the calcination raw materials at a predetermined temperature rising rate until reaching a predetermined temperature, maintaining them at the predetermined temperature for a predetermined time, and then cooling them naturally.

<<Non-oxidizing atmosphere>>

The calcination is preferably performed under a non-oxidizing atmosphere. The non-oxidizing atmosphere refers to an atmosphere that does not substantially contain oxygen, and is adopted to suppress oxidative deterioration and excessive pyrolysis of constituent components. Specifically, it refers to an inert gas atmosphere such as nitrogen, argon, and the like, a sulfur gas atmosphere, an ammonia gas atmosphere, or the like. Thus, the calcination can be appropriately performed, for example, in a quartz tube under an inert gas atmosphere.

<<Temperature rising rate>>

The temperature rising rate is preferably within a range of, for example, 50°C/h or higher and 500°C/h or lower. The temperature rising rate is preferably 80°C/h or higher, more preferably 100°C/h or higher, further preferably 120°C/h or higher. On the other hand, the temperature rising rate is more preferably 400°C/h or lower, further preferably 300°C/h or lower, further preferably 200°C/h or lower. When the temperature rising rate is within such ranges, there is a tendency to easily achieve the purpose of improving charge and discharge capacity and cycle characteristics.

<<Calcination temperature/time>>

A calcination temperature refers to a temperature after completion of a temperature rising of a raw material, the temperature being maintained for a certain period of time for calcining the raw material. The temperature is preferably in a range of higher than 250°C and lower than 550°C. When it is higher than 250°C, there is a tendency to avoid insufficient sulfurization reaction and prevent a decrease in charge and discharge capacity of an object. On the other hand, when it is lower than 550°C, there is a tendency that decomposition of the raw material can be prevented and a decrease in yield and a decrease in charge and discharge capacity can be prevented. The temperature is more preferably higher than 270°C, further preferably higher than 290°C, further preferably 300°C or higher. On the other hand, the temperature is more preferably lower than 500°C, further preferably lower than 470°C, further preferably 450°C or lower.

When a raw-material metal compound is used as a raw material, a calcination temperature in the calcination step is preferably higher than a temperature at which the raw-material metal compound pyrolyzes from the viewpoint of improving performance of the electrode and/or the battery.

A time for maintaining the calcination temperature may be appropriately set according to types of raw materials, a calcination temperature, etc., but is preferably 0.5 hours or more and 6 hours or less, for example. When it is 0.5 hours or more, there is a tendency that the calcination can be sufficiently advanced, and when it is 6 hours or less, there is a tendency that excessive pyrolysis of the constituent components can be prevented. The time is more preferably 0.6 hours or more, further preferably 0.7 hours or more. On the other hand, the time is more preferably 4 hours or less, further preferably 2 hours or less.

<<Device>>

Calcination can be performed by, for example, a muffle furnace (FIG. 1), or can be performed using a continuous device such as, for example, a twin-screw extruder and the like. When the continuous device is used, there is an advantage that the sulfur-based electrode active material can be continuously produced through a series of operations such as also performing calcination while kneading, pulverizing, and mixing raw materials in the device, and the like.

The muffle furnace (FIG. 1) is a furnace partitioned by a hot plate or the like so that a heat source (heater) is not exposed inside the furnace in order to prevent contamination of a sample. In FIG. 1, the muffle furnace 1 has a heater 2 in the lower part of the furnace, the heater being partitioned by the hot plate. A lid 3 is installed on the front surface of the furnace (the left end side in the figure), which makes the furnace to have a structure in which the inside of the furnace can be held with an atmosphere of an inert gas 4. A thermocouple (not shown) is attached to the lid, so that a temperature inside the furnace during calcination can be measured. Two tiers of trays 5 and 6 that are stainless steel rectangular parallelepiped reaction vessels for calcination raw materials are installed on the upper tier and the lower tier, inside the furnace.

The inside of the furnace is configured so that gas (for example, an inert gas such as an argon (Ar) gas and the like) can be continuously supplied in from and discharged out to the outside through a gas introduction tube 7 and a gas discharge tube 8. The gas discharge tube 8 is connected to a trap tank 10 accommodating a sodium hydroxide aqueous solution 9, and an exhaust gas to exit from the muffle furnace 1 through the gas discharge tube 8 to the outside once passes through the sodium hydroxide aqueous solution 9 in the trap tank 10 and then is released to the outside. Therefore, even if the exhaust gas contains a hydrogen sulfide gas generated by reaction, the hydrogen sulfide gas is neutralized with the sodium hydroxide aqueous solution and removed from the exhaust gas.

[Residue-removing step]

A residue-removing step is a step of removing, from the calcined material, residues such as unreacted sulfur and the like that are precipitated from sulfur sublimated during calcination and then cooled. It is desirable to remove these residues as much as possible because they may cause deterioration of cycle characteristics, if any. Removal of the residues can be performed, for example, by subjecting the calcined material to a conventional method such as drying by heating under reduced pressure, drying with hot air, washing with a solvent, and the like.

<<Pulverizing step (3)>>

The pulverizing step is a step of pulverizing a calcined material to obtain particles of the calcined material. The calcined material is preferably pulverized to form particles of size suitable for production of an electrode. A preferred size range of the particle of the electrode active material is as described above.

The pulverization can be performed by a conventional method, for example, by subjecting the material to pulverization treatment under a predetermined condition using a pulverizer such as a cutter mill, a jet mill, and the like. A pulverization condition varies depending on a mill used, etc., but for example, when a cutter mill (e.g., Free Speed Mill

FS-20 manufactured by Labonect) is used, the treatment can be performed at a rotation speed of 20,000 rpm or more and 30,000 rpm or less for 1 second or more and 30 seconds or less. Moreover, when a dry jet mill (e.g., Nano Jetmizer NJ-30 manufactured by Aishin Nano Technologies CO., LTD) is used, the treatment can be performed at a processing speed of 1 g/min or more and 3 g/min or less with a pulverizing pressure of 0.5 MPa or more and 2.0 MPa or less.

The particles of the pulverized calcined material as obtained above may be classified as desired to further make the particle sizes of the particles uniform. The classification can be performed, for example, using a sieve having a desired size of a sieve opening.

Besides, in the calcination method using the twin-screw extruder as described above, at the same time with production of an electrode active material, pulverization of the produced electrode active material into particles can be also performed, by shearing during kneading.

(Production of electrode for lithium-ion secondary battery)

Using the electrode active material obtained above, an electrode for lithium-ion secondary battery comprising an electrode active material layer containing the electrode active material can be produced by a conventional method. That is, the electrode can be obtained in the same manner as in the case of producing a general electrode for lithium-ion secondary battery, except that the above-described electrode active material is used as an active material.

[Using electrode active material as positive electrode active material]

A positive electrode for lithium-ion secondary battery can be produced in the same manner as in the case for a general positive electrode for lithium-ion secondary battery, except that the above-described electrode active material is used as a positive electrode active material. For example, the positive electrode can be produced by mixing the electrode active material with a conductive aid, a binder, and a solvent to prepare a pasty positive electrode material, applying the positive electrode material to a current collector, and then drying it. As another method, the positive electrode can also be produced, for example, by kneading the electrode active material together with a conductive aid, a binder, and a small amount of solvent using a mortar or the like and forming them into a film, followed by crimping it to a current collector using a press machine or the like.

<<Conductive aid>>

Examples of the conductive aid include, for example, Vapor Grown Carbon Fiber (VGCF), carbon powder, carbon black (CB), acetylene black (AB), Ketjen black (KB), graphite, or a fine powder of metal that is stable at a positive electrode potential such as aluminum, titanium, and the like. Moreover, as the conductive aid, a conductive carbon material can also be used, among the above-described carbon materials. One or two or more kinds of these conductive aids can be used.

<<Binder>>

Examples of the binder include polyvinylidene fluoride (PolyVinylidene DiFluoride: PVDF), polytetrafluoroethylene (PTFE), a styrenebutadiene rubber (SBR), polyimide (PI), polyamide imide (PAI), carboxymethylcellulose (CMC), polyvinyl chloride (PVC), an acrylic resin, a methacrylic resin (PMA), polyacrylonitrile (PAN), a modified polyphenylene oxide (PPO), polyethylene oxide (PEO), polyethylene (PE), polypropylene (PP), and the like. One or more kinds of these binders can be used.

<<Solvent>>

Examples of the solvent include N-methyl-2-pyrrolidone, N,N-dimethylformaldehyde, alcohol, hexane, water, and the like. One or more kinds of these solvents can be used.

<<Compounding amount>>

A compounding amount of these materials constituting the positive electrode is not particularly limited, but, for example, 2 to 100 parts by mass of a conductive aid, 2 to 50 parts by mass of a binder, and an appropriate amount of a solvent are preferably compounded based on 100 parts by mass of the electrode active material.

<<Current collector>>

As the current collector, those generally used for a positive electrode for lithium-ion secondary battery may be

used. For example, examples of the current collector include one composed of a metal foil such as an aluminum foil, an aluminum mesh, a punched aluminum sheet, an expanded aluminum sheet, a stainless steel foil, a stainless steel mesh, a punched stainless steel sheet, an expanded stainless steel sheet, a nickel foam, a nickel non-woven fabric, a copper foil, a copper mesh, a punched copper sheet, an expanded copper sheet, a titanium foil, a titanium mesh, and the like, as well as one composed of a carbon non-woven fabric, a carbon woven fabric, or the like. Among them, a current collector comprising a metal foil is preferable. The current collector may be used alone, or two or more thereof may be used in combination. In addition, the current collector may have its surface coated with carbon or the like. Specific examples of such a current collector having its surface coated with carbon or the like include, for example, a carbon-coated aluminum foil and the like. In this case, the current collector includes a carbon-coated portion.

[Using electrode active material as negative electrode active material]

The negative electrode for lithium-ion secondary battery can be produced in the same manner as in the case for a general negative electrode for lithium-ion secondary battery, except that the above-described electrode active material is used as a negative electrode active material. For example, the negative electrode can be produced by mixing the electrode active material with a conductive aid, a binder, and a solvent to prepare a pasty negative electrode material, applying the negative electrode material to a current collector, and then drying it. As another method, the negative electrode can also be produced, for example, by kneading the electrode active material together with a conductive aid, a binder, and a small amount of solvent using a mortar or the like and forming them into a film, followed by crimping it to a current collector using a press machine or the like.

As the conductive aid, binder, and solvent, the same ones as in the case of using the electrode active material as the positive electrode active material can be used, and the same can also be applied to the current collector.

(Production of lithium-ion secondary battery)

The lithium-ion secondary battery of the present embodiment can be produced in the same manner as in the case of producing a general lithium-ion secondary battery, except that the electrode for lithium-ion secondary battery obtained above is used.

[Using electrode active material as positive electrode active material]

The lithium-ion secondary battery of the present embodiment can be produced using a negative electrode and an electrolyte, and further, if desired, a member such as a separator and the like, in addition to a positive electrode comprising the above-described electrode active material (positive electrode active material), according to a conventional method.

<<Negative electrode>>

As the negative electrode material, a known metallic lithium, a carbon-based material such as graphite and the like, a silicon-based material such as a silicon thin film and the like, and an alloy-based material such as copper-tin, cobalt-tin, and the like can be used. When a lithium-free material, such as, for example, a carbon-based material, a silicon-based material, an alloy-based material, and the like, among the above-described negative electrode materials, is used as the negative electrode material, it is advantageous that a short circuit between the positive and negative electrodes due to generation of dendrites is unlikely to occur. However, when these lithium-free negative electrode materials are used in combination with the positive electrode of the present embodiment, neither the positive electrode nor the negative electrode contain lithium. For this reason, a lithium pre-doping process of inserting lithium into either or both of the negative electrode and the positive electrode in advance is required. As a method of pre-doping lithium, a known method may be followed. For example, when doping lithium into the negative electrode, there are a method of inserting lithium by an electrolytic doping method of assembling a half cell using metallic lithium as a counter electrode and electrochemically doping lithium and a method of inserting lithium by a pasting pre-doping method of attaching a metallic lithium foil to the electrode, then leaving it in an electrolyte solution, and doping it by utilizing diffusion of lithium into the electrode. Moreover, when pre-doping lithium into the positive electrode, the above-described electrolytic doping method can be used. As the lithium-free negative electrode materials, silicon-based materials that are negative electrode materials with a high capacity are particularly preferable, and among them, a thin-film silicon, which is thin in electrode thickness and thus is advantageous in terms of capacity per volume, is more preferable.

<<Electrolyte>>

The electrolyte compensates, with flowing ions, for electric charge generated by electrons being released to an

external circuit along with oxidation/reduction of electrode active materials at the positive and negative electrodes. As the electrolyte used for the lithium-ion secondary battery, those obtained by dissolving an alkali metal salt that is an electrolyte in an organic solvent can be used. As the organic solvent, it is preferable to use at least one selected from non-aqueous solvents such as dimethoxyethane, ethylene carbonate, propylene carbonate, dimethyl carbonate, diethyl carbonate, ethyl methyl carbonate, dimethyl ether, γ-butyrolactone, acetonitrile, and the like. As the electrolyte, $Li(FSO_2)_2N$, $LiPF_6$, $LiBF_4$, $LiAsF_6$, $LiCF_3SO_3$, LiI, $LiClO_4$, and the like can be used. A concentration of the electrolyte has only to be about 0.5 mol/L to 5.0 mol/L. Besides, the electrolyte is not limited to one in a liquid state. For example, when the lithium-ion secondary battery is a lithium polymer secondary battery, the electrolyte is in a solid state (for example, a polymer gel state).

<<Separator>>

The lithium-ion secondary battery may comprise a member such as a separator and the like, in addition to the negative electrode, positive electrode, and electrolyte as mentioned above. The separator is interposed between the positive electrode and the negative electrode, permits ion migration between the positive electrode and the negative electrode, and prevents an internal short circuit between the positive electrode and the negative electrode. If the lithium-ion secondary battery is of a sealed type, the separator is required to have a function of retaining the electrolyte solution. As the separator, it is preferable to use a thin and microporous or non-woven fabric film made of polyethylene, polypropylene, polyacrylonitrile, aramid, polyimide, cellulose, glass, or the like.

<<Shape>>

A shape of the lithium-ion secondary battery is not particularly limited, and various shapes such as a cylindrical shape, a stacked shape, a coin shape, a laminate shape, a button shape, and the like can be used.

[Using electrode active material as negative electrode active material]

The lithium-ion secondary battery of the present embodiment can be produced using a positive electrode and an electrolyte, and further, if desired, a member such as a separator and the like, in addition to a negative electrode comprising the above-described electrode active material (negative electrode active material), according to a conventional method.

<<Positive electrode>>

The positive electrode material is not particularly limited as long as it is, for example, a transition metal oxide or solid solution oxide that contains lithium, or a substance capable of electrochemically absorbing and releasing lithium ions. Examples of the transition metal oxide that contain lithium include, for example, a Li-Co-based composite oxide such as $LiCoO_2$ and the like, a Li-Ni-Co-Mn-based composite oxide such as $LiNi_xCo_yMn_zO_2$ and the like, a Li-Ni-based composite oxide such as $LiNiO_2$ and the like, a Li-Mn-based composite oxide such as $LiMn_2O_4$ and the like, etc. Examples of the solid solution oxide include, for example, $Li_aMn_xCo_yNi_zO_2$ ($1.150 \leq a \leq 1.430$, $0.450 \leq x \leq 0.600$, $0.100 \leq y \leq 0.150$, $0.200 \leq z \leq 0.280$), $LiMn_xCo_yNi_zO_2$ ($0.300 \leq x \leq 0.850$, $0.100 \leq y \leq 0.300$, $0.100 \leq z \leq 0.300$), $LiMn_{1.5}Ni_{0.5}O_4$, and the like. These compounds may be used alone, or multiple kinds thereof may be mixed and used.

<<Others>>

As for the electrolyte, the separator, and the shape of the lithium-ion secondary battery, the same ones as in the case of using the electrode active material as the positive electrode active material can be used.

EXAMPLES

Although the present invention will be described based on Examples, it is not limited to Examples.
Various chemicals used in Examples and Comparative examples are collectively shown below. Various chemicals were purified according to a conventional method as necessary.

<Materials used in tests>

Cellulose: Cellulose (manufactured by FUJIFILM Wako Pure Chemical Corporation, white powder, passing through

38 μm (400 mesh))
Diene-based rubber: High cis-butadiene rubber (UBEPOL (Registered Trademark) BR150L manufactured by UBE Corporation, cis content (cis-1,4-bond butadiene unit amount): 98% by mass)
PP: Polypropylene (available from Sigma-Aldrich, catalog number: 428116, melting point: 157°C)
Cross-linked PMMA: Cross-linked polymethyl methacrylate (TECHPOLYMER MB30X-8 manufactured by Sekisui Kasei Co., Ltd., a spherical acrylic resin composed of methyl methacrylate and ethylene glycol dimethacrylate copolymer, particle size: 8 μm)
Sulfur: Precipitated sulfur manufactured by Tsurumi Chemical Industry Co., Ltd.

Production example 1 (Pulverization of raw material)

Before using cellulose and polypropylene as raw materials, each of cellulose and polypropylene was pulverized for 10 minutes in advance using a freezing pulverizer (JFC-2000 manufactured by Japan Analytical Industry Co., Ltd.).

<Production of electrode active material>

(Mixing step)

Raw materials were charged according to the compounding ratios in Table described below and mixed using a blender (LAB MILL manufactured by OSAKA CHEMICAL Co., Ltd.) to obtain a calcination raw material.

(Calcination step)

A muffle furnace (FIG. 1) was used to calcinate a raw material. The muffle furnace in FIG. 1 is as described above.

First, an atmosphere in a muffle furnace was replaced with an Ar gas three times using a vacuum pump with a calcination raw material being contained in a tray that is a stainless steel reaction vessel. Then, while continuously supplying the Ar gas at a flow rate of 100 mL/min from a gas introduction tube, heating of the muffle furnace was initiated 30 minutes after the start of supply. The temperature was increased at a temperature rising rate of 5°C/min, and when the temperature of the calcination raw material reached a calcination temperature described in Table 1, heat treatment was performed for 45 minutes while maintaining the temperature. Next, while adjusting the flow rate of the Ar gas, the temperature of the calcined material was naturally cooled to 25°C under an Ar gas atmosphere, and then the calcined material was taken out from the muffle furnace.

(Removal of unreacted sulfur)

In order to remove unreacted sulfur (sulfur alone in a free state) remaining in the product after the calcination step, the following step was performed. That is, the calcined material was pulverized in a mortar, and the pulverized product was placed in a glass tube oven and heated at 290°C for 3 hours while being vacuum-sucked to obtain an electrode active material in which unreacted sulfur was removed (or which comprises only a trace amount of unreacted sulfur). The temperature rising rate was set to 10°C/min.

(Pulverizing step)

The calcined material from which unreacted sulfur was removed was pulverized using a cutter mill (LAB MILL manufactured by OSAKA CHEMICAL Co., Ltd.).

(Classification work)

In order to remove coarse particles from the calcined material after the pulverization, the calcined material was classified using a 32 μm mesh stainless steel sieve to obtain an electrode active material.

<Physical property of electrode active material>

The electrode active material obtained above was examined for the following properties.

(Particle size distribution, median diameter)

A particle size distribution was measured with a laser diffraction/scattering type particle size distribution analyzer

(particle size distribution analyzer PSA1090L manufactured by Anton Paar GmbH) using water as a dispersion medium to obtain a particle size distribution curve. From the particle size distribution curve, a volume basis cumulative 50% size (median diameter d50) was measured.

(Elemental composition)

For amounts of elements of carbon, hydrogen, nitrogen, and sulfur, a mass ratio, in %, occupied in a total amount of electrode active materials was calculated from a mass measured using a vario MICRO cube, a fully automatic elemental analyzer, manufactured by Elementar. For an amount of an element of oxygen, a mass ratio, in %, occupied in a total amount of electrode active materials was calculated from a mass measured using Oxygen/Nitrogen/Hydrogen Analyzer, EMGA-930, manufactured by Horiba, Ltd.

<Production of lithium-ion secondary battery>

A lithium-ion secondary battery was produced as follows.

(Positive electrode)

The electrode active material obtained above was used as an active material, acetylene black (HS-100 manufactured by Denka Company Limited) was used as a conductive aid, and an acrylic resin (manufactured by FUJIFILM Wako Pure Chemical Corporation, average molecular weight: 2700 to 7500) was used as a binder. They were weighed so that a proportion of the active material:acetylene black:binder became 85:10:5, in % by mass, put in a container, stirred and mixed with a planetary centrifugal mixer (ARE-250 manufactured by THINKY CORPORATION) using milliQ water for a dispersant to produce a uniform slurry. The slurry produced was applied onto a 17 μm aluminum foil using an applicator with a slit width of 100 μm, and compressed using a roll press to obtain an electrode, which was then heated at 120°C for 3 hours, dried with a dryer, and then punched to φ11 mm to obtain an electrode (positive electrode). Then, a mass of the electrode was measured to calculate an amount of an active material in the electrode from the above-mentioned ratio.

(Negative electrode)

As the negative electrode, a metallic lithium foil (disk-shaped with a diameter of 14 mm and a thickness of 500 μm, manufactured by Honjo Metal Co., Ltd.) was used. A stainless steel sheet was used as a negative electrode current collector.

(Electrolyte solution)

As the electrolyte solution, a nonaqueous electrolyte in which $LiPF_6$ was dissolved in a mixed solvent of ethylene carbonate and diethyl carbonate was used. Ethylene carbonate and diethyl carbonate were mixed at a volume ratio of 1:1. A concentration of $LiPF_6$ in the electrolyte solution was 1.0 mol/L.

(Lithium-ion secondary battery)

A coin battery was produced using the above-described positive electrode and negative electrode. In detail, in a dry room, a separator (Celgard 2400 manufactured by Celgard LLC, a polypropylene microporous membrane with a thickness of 25 μm) and a glass non-woven fabric filter (440 μm thickness, GA100 manufactured by ADVANTEC) were clamped between the positive electrode and the negative electrode to form an electrode body battery. This electrode body battery was accommodated in a battery case made of stainless steel (member for CR2032 type coin battery, manufactured by Hohsen Corp.). The above-described electrolyte solution was injected into the battery case. An amount of the electrolyte was 0.28 mL in terms of electrolyte volume. The battery case was sealed with a caulking machine to obtain a lithium-ion secondary battery in each of Examples and Comparative example.

<Evaluation on lithium-ion secondary battery>

(Discharge capacity and capacity retention rate)

Each coin-type lithium-ion secondary battery produced in Examples and Comparative examples was charged and discharged at a current value corresponding to 50 mA per 1 g of a positive electrode active material from the 1st time to

the 10th time, and charged and discharged at a current value corresponding to 100 mA per 1 g of a positive electrode active material from the 11th time to the 20th time, under a condition of a test temperature at 30°C. A discharge termination voltage was set to 1.0V, and a charge termination voltage was set to 3.0V. While charging and discharging were repeated, the 1st, the 2nd, the 10th, and the 20th battery discharge capacities, in mAh, were observed. The measurement was performed using a battery performance evaluation device (BLS system manufactured by KEISOKUKI CENTER CO., LTD.).

The 2nd discharge capacity $DC_3$ in mAh/g, was defined as an initial capacity. The larger the initial capacity is, the larger the charge and discharge capacity of the lithium-ion secondary battery is, which can be evaluated to be preferable. Moreover, a capacity retention rate, in %, was calculated from the 2nd discharge capacity $DC_2$, in mAh/g, and the 20th discharge capacity $DC_{20}$, in mAh/g, according to the following equation. It can be said that the higher the capacity retention rate is, the more excellent the cycle characteristics of the lithium-ion secondary battery is.

$$\text{Capacity retention rate (\%)} = (DC_{20}/DC_2) \times 100$$

The results are shown in Table 1 below.

Table 1

| | | | Example | | | | Comparative example | | | |
|---|---|---|---|---|---|---|---|---|---|---|
| | | | 1 | 2 | 3 | 4 | 1 | 2 | 3 | 4 |
| Electrode active material | | | | | | | | | | |
| Raw material | Compounding (parts by mass) | Cellulose | 100 | 100 | 100 | 100 | - | 100 | - | - |
| | | Diene-based rubber | - | - | - | - | 100 | - | - | - |
| | | PP | - | - | - | - | - | - | 100 | - |
| | | Cross-linked PMMA | - | - | - | - | - | - | - | 100 |
| | | Sulfur | 100 | 300 | 400 | 300 | 1000 | 100 | 300 | 300 |
| Calcination | | Calcination temperature (°C) | 300 | 400 | 450 | 325 | 500 | 275 | 400 | 400 |
| Elemental composition (%) | | C | 44.6 | 38.9 | 39.7 | 41.5 | 37.5 | 54.7 | 59.8 | 40.1 |
| | | H | 0.86 | 0.36 | 0.39 | 0.66 | 0.20 | 2.30 | 3.03 | 0.45 |
| | | N | 0.00 | 0.03 | 0.02 | 0.01 | 0.30 | 0.01 | 0.00 | 0.01 |
| | | O ($A_O$) [Inequality (1)] | 18.8 | 14.4 | 9.6 | 16.2 | 1.7 | 27.9 | 5.4 | 5.0 |
| | | S ($A_S$) [Inequality (2)] | 45.2 | 54.6 | 59.5 | 51.4 | 58.9 | 20.4 | 36.2 | 60.5 |
| Median diameter (μm) | | | 8.11 | 7.65 | 7.65 | 7.30 | 12.0 | 7.75 | 6.99 | 6.29 |
| $A_O \times A_S$ [Inequality (3)] | | | 850 | 786 | 571 | 833 | 97.8 | 569 | 195 | 303 |

| Electrode | Example | | | | Comparative example | | | |
|---|---|---|---|---|---|---|---|---|
| | 1 | 2 | 3 | 4 | 1 | 2 | 3 | 4 |
| Application density (mg/cm$^2$) (D) | 2.78 | 2.86 | 2.76 | 2.63 | 3.01 | 2.80 | 2.72 | 3.14 |
| Thickness of metal foil (μm) (T) | 17 | 17 | 17 | 17 | 17 | 17 | 17 | 17 |
| $D \times (A_O \times A_S)$ [Inequality (4)] | 2362 | 2250 | 1577 | 2190 | 294 | 1596 | 532 | 954 |
| $D \times (A_O \times A_S)/T$ [Inequality (5)] | 139 | 132 | 93 | 129 | 17 | 94 | 31 | 56 |
| Battery | | | | | | | | |
| Volume of electrolyte (mL) [V] | 0.28 | 0.28 | 0.28 | 0.28 | 0.28 | 0.28 | 0.28 | 0.28 |

(continued)

| Battery | | | | | | | | | |
|---|---|---|---|---|---|---|---|---|---|
| D×($A_O$×$A_S$)/V [Inequality (6)] | | 8435 | 8037 | 5631 | 7821 | 1050 | 5699 | 1900 | 3406 |
| Discharge capacity (mAh/g) | 1st ($DC_1$) | 743.9 | 862.0 | 792.6 | 766.3 | 781.9 | 354.9 | 275.1 | 879.7 |
| | 2nd ($DC_2$) | 494.3 | 637.8 | 551.5 | 561.6 | 453.2 | 182.3 | 155.0 | 651.2 |
| | 10th ($DC_{10}$) | 456.6 | 590.2 | 515.7 | 515.4 | 309.3 | 176.1 | 133.8 | 600.8 |
| | 20th ($DC_{20}$) | 431.2 | 559.0 | 487.8 | 494.9 | 241.3 | 156.8 | 110.8 | 532.8 |
| Capacity retention rate (%) ($DC_{20}/DC_2$) | | 87.2 | 87.6 | 88.4 | 88.1 | 53.2 | 86.0 | 71.5 | 81.8 |

Examples 1 to 4 showed higher initial discharge capacities compared with Comparative examples 2 and 3. This is because it is considered that the high sulfur content rate allows more sulfur to combine with lithium ions. Besides, the initial discharge capacity is lower than those of Examples 1 to 4, despite that Comparative example 1 has the high sulfur content rate. Moreover, Examples 1 to 4 showed higher capacity retention rates compared with Comparative examples 1, 3, and 4. This is because it is considered that the sulfur content rate was sufficiently high and the oxygen content rate was also high, which suppressed side reactions during charge and discharge reactions.

<Embodiments>

Preferred embodiments are shown below.

[1] An electrode active material of particles comprising an organic sulfur compound,

wherein Ao and $A_S$ satisfy the following inequalities, or at least one of the right sides in the inequalities (1) to (3) takes a more preferable value, where the preferred value for the right side in the inequality (1) is 10.0, the preferred value for the right side in the inequality (2) is 46.0, more preferably 47.0, further preferably 48.0, further preferably 49.0, and the preferred value for the right side in the inequality (3) is 560:

(1)

$$A_O > 9.0$$

(2)

$$A_S > 45.0$$

(3)

$$A_O \times A_S > 550$$

where Ao represents an oxygen content, in % by mass, in the electrode active material, and $A_S$ represents a sulfur content, in % by mass, in the electrode active material.

[2] The electrode active material of [1] above, wherein the right side in the inequality (1) is 11.0, preferably 12.0, more preferably 13.0, further preferably 14.0, further preferably 15.0, further preferably 16.0, further preferably 17.0, further preferably 18.0.
[3] The electrode active material of [1] or [2] above, wherein the right side in the inequality (2) is 50.0, preferably 51.0, more preferably 52.0, further preferably 53.0, further preferably 54.0, further preferably 55.0, further preferably 56.0, further preferably 57.0, further preferably 58.0, further preferably 59.0.
[4] The electrode active material of any one of [1] to [3] above, wherein the right side in the inequality (3) is 570, preferably 600, more preferably 650, further preferably 700, further preferably 750, further preferably 800, further preferably 830, further preferably 840.
[5] The electrode active material of any one of [1] to [4] above, wherein the active material further comprises a metal compound, the metal compound comprising at least one metal selected from the group consisting of iron, molybdenum, vanadium, and titanium.

[6] The electrode active material of [5] above, wherein the metal compound is an iron compound.
[7] An electrode comprising the electrode active material of any one of [1] to [6] above.
[8] The electrode of [7] above,

wherein the electrode comprises a current collector,
wherein the current collector comprises a metal foil, and
wherein D, Ao, and As satisfy the following inequality, or the right side in the inequality (4) is preferably 1500, more preferably 1700, further preferably 1900, further preferably 2100, further preferably 2200, further preferably 2300:
(4)

$$D \times (A_O \times A_S) > 1000$$

where D represents an application density, in mg/cm$^2$, of the electrode active material on the current collector.

[9] The electrode of [7] or [8] above,

wherein the electrode comprises a current collector,
wherein the current collector comprises a metal foil, and
wherein D, T, Ao, and $A_S$ satisfy the following inequality, or the right side in the inequality (5) is preferably 80, more preferably 90, further preferably 110, further preferably 120, further preferably 130:
(5)

$$D \times (A_O \times A_S)/T > 60$$

where D represents an application density, in mg/cm$^2$, of the electrode active material on the current collector, and T represents a thickness, in $\mu$m, of the metal foil.

[10] The electrode of any one of [7] to [9] above,

wherein the electrode comprises a current collector,
wherein the current collector comprises a metal foil, and
wherein D is greater than 2.50 mg/cm$^2$, preferably greater than 3.00 mg/cm$^2$, more preferably greater than 3.50 mg/cm$^2$, further preferably greater than 3.80 mg/cm$^2$, further preferably greater than 3.90 mg/cm$^2$,
where D represents an application density, in mg/cm$^2$, of the electrode active material on the current collector.

[11] The electrode of any one of [7] to [10] above, wherein the electrode is a positive electrode.
[12] A lithium-ion secondary battery comprising the electrode of any one of [7] to [11] above.
[13] The lithium-ion secondary battery of [12] above, further comprising an electrolyte,

wherein V, D, Ao, and As satisfy the following inequality, or the right side in the inequality (6) is preferably 4500, more preferably 5000, further preferably 5500, further preferably 6000, further preferably 7000, further preferably 7500, further preferably 8000:
(6)

$$D \times (A_O \times A_S)/V > 4000$$

where V represents a volume, in mL, of the electrolyte, and D represents an application density, in mg/cm$^2$, of the electrode active material on the current collector.

[14] A method of producing an electrode active material, the method comprising:

(1) a mixing step of mixing a raw material containing cellulose and sulfur having a mass equal to or greater than a mass of the cellulose to obtain a calcination raw material;
(2) a calcination step of calcining the calcination raw material to obtain a calcined material; and
(3) a pulverization step of pulverizing the calcined material to obtain particles of the calcined material.

[15] The method of [14] above, wherein the cellulose is a chemically unmodified cellulose.

REFERENCE SIGNS LIST

1. Muffle furnace
2. Heater
3. Lid
4. Inert gas
5. Tray (Upper tier)
6. Tray (Lower tier)
7. Gas introduction tube
8. Gas discharge tube
9. Sodium hydroxide aqueous solution
10. Trap tank

## Claims

**1.** An electrode active material of particles comprising an organic sulfur compound,

wherein Ao and As satisfy the following inequalities:

(1)

$$A_O>9.0$$

(2)

$$A_S>45.0$$

(3)

$$A_O\times A_S>550$$

where Ao represents an oxygen content, in % by mass, in the electrode active material, and As represents a sulfur content, in % by mass, in the electrode active material.

**2.** The electrode active material of claim 1, wherein the right side in the inequality (1) is 11.0.

**3.** The electrode active material of claim 1, wherein the right side in the inequality (2) is 50.0.

**4.** The electrode active material of claim 1, wherein the right side in the inequality (3) is 570.

**5.** The electrode active material of any one of claims 1 to 4, wherein the active material further comprises a metal compound, the metal compound comprising at least one metal selected from the group consisting of iron, molybdenum, vanadium, and titanium.

**6.** The electrode active material of claim 5, wherein the metal compound is an iron compound.

**7.** An electrode comprising the electrode active material of any one of claims 1 to 4.

**8.** The electrode of claim 7,

wherein the electrode comprises a current collector,
wherein the current collector comprises a metal foil, and
wherein D, Ao, and As satisfy the following inequality:
(4)

$$D\times(A_O\times A_S)>1000$$

where D represents an application density, in mg/cm$^2$, of the electrode active material on the current collector.

**9.** The electrode of claim 7,

wherein the electrode comprises a current collector,
wherein the current collector comprises a metal foil, and
wherein D, T, $A_O$, and $A_S$ satisfy the following inequality:
(5)

$$D\times(A_O\times A_S)/T>60$$

where D represents an application density, in mg/cm$^2$, of the electrode active material on the current collector, and T represents a thickness, in μm, of the metal foil.

**10.** The electrode of claim 7,

wherein the electrode comprises a current collector,
wherein the current collector comprises a metal foil, and
wherein D is greater than 2.50 mg/cm$^2$,
where D represents an application density, in mg/cm$^2$, of the electrode active material on the current collector.

**11.** The electrode of claim 7, wherein the electrode is a positive electrode.

**12.** A lithium-ion secondary battery comprising the electrode of claim 7.

**13.** The lithium-ion secondary battery of claim 12, further comprising an electrolyte,

wherein V, D, Ao, and $A_S$ satisfy the following inequality:
(6)

$$D\times(A_O\times A_S)/V>4000$$

where V represents a volume, in mL, of the electrolyte, and D represents an application density, in mg/cm$^2$, of the electrode active material on the current collector.

**14.** A method of producing an electrode active material, the method comprising:

(1) a mixing step of mixing a raw material containing cellulose and sulfur having a mass equal to or greater than a mass of the cellulose to obtain a calcination raw material;
(2) a calcination step of calcining the calcination raw material to obtain a calcined material; and
(3) a pulverization step of pulverizing the calcined material to obtain particles of the calcined material.

**15.** The method of claim 14, wherein the cellulose is a chemically unmodified cellulose.

FIG. 1

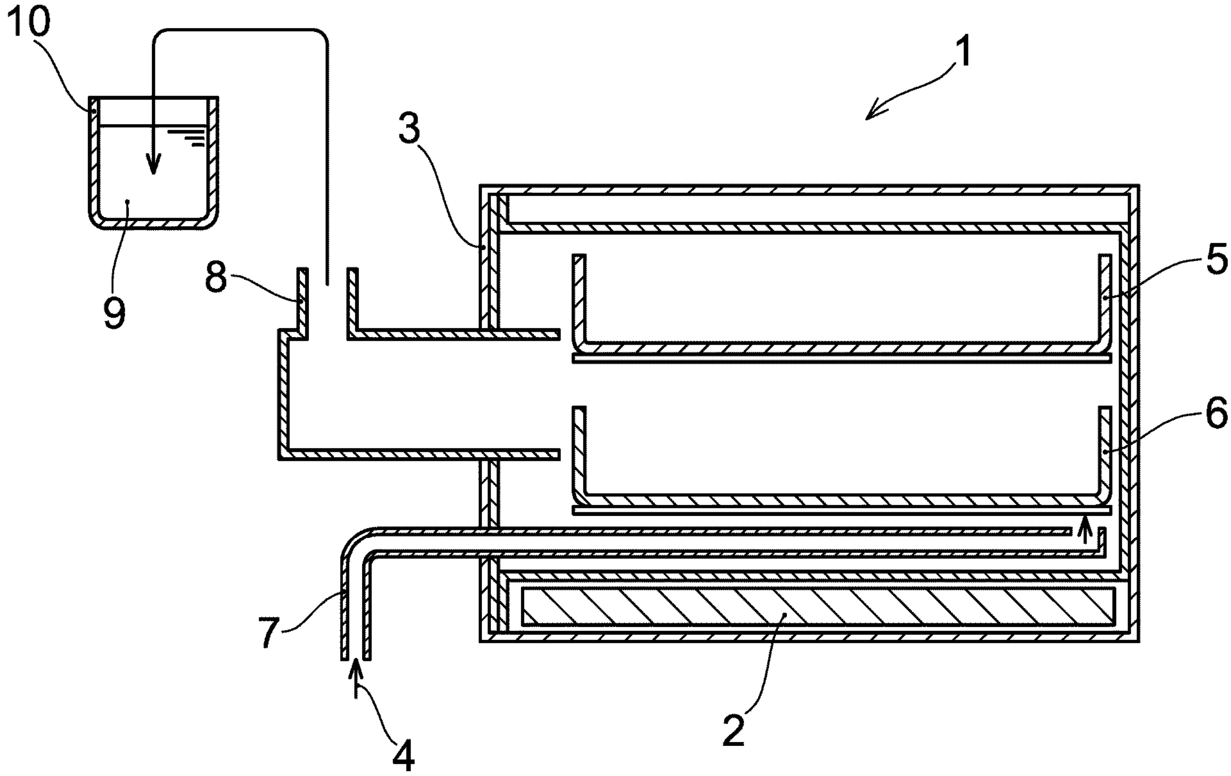

## INTERNATIONAL SEARCH REPORT

International application No. **PCT/JP2024/029925**

### A. CLASSIFICATION OF SUBJECT MATTER

***H01M 4/60***(2006.01)i; ***H01M 4/137***(2010.01)i; ***H01M 4/1397***(2010.01)i; ***H01M 4/36***(2006.01)i
FI: H01M4/60; H01M4/137; H01M4/36 E; H01M4/1397

According to International Patent Classification (IPC) or to both national classification and IPC

### B. FIELDS SEARCHED

Minimum documentation searched (classification system followed by classification symbols)

H01M4/60; H01M4/137; H01M4/1397; H01M4/36

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | JP 2018-055998 A (NATIONAL INSTITUTE OF ADVANCED INDUSTRIAL SCIENCE AND TECHNOLOGY) 05 April 2018 (2018-04-05)<br>claim 1, paragraphs [0005], [0014], examples | 1-4, 7, 11, 12 |
| A | WO 2016/159212 A1 (NATIONAL INSTITUTE OF ADVANCED INDUSTRIAL SCIENCE AND TECHNOLOGY) 06 October 2016 (2016-10-06)<br>entire text, all drawings | 1-15 |

☐ Further documents are listed in the continuation of Box C.  ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **22 October 2024** | **05 November 2024** |
| Name and mailing address of the ISA/JP<br>**Japan Patent Office (ISA/JP)**<br>**3-4-3 Kasumigaseki, Chiyoda-ku, Tokyo 100-8915**<br>**Japan** | Authorized officer<br><br>Telephone No. |

Form PCT/ISA/210 (second sheet) (July 2022)

**INTERNATIONAL SEARCH REPORT**
**Information on patent family members**

International application No.
**PCT/JP2024/029925**

| Patent document cited in search report | Publication date (day/month/year) | Patent family member(s) | Publication date (day/month/year) |
|---|---|---|---|
| JP 2018-055998 A | 05 April 2018 | (Family: none) | |
| WO 2016/159212 A1 | 06 October 2016 | US 2018/0065927 A1<br>entire text, all drawings<br>EP 3279141 A1<br>KR 10-2017-0133406 A<br>CN 107709233 A | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2015050086 A
- JP 2021172814 A